# EUROPEAN PATENT APPLICATION

(11) **EP 4 803 172 A1**
(43) Date of publication of application: **09.09.2026**
(21) Application number: 26161573.6
(22) Date of filing: 02.03.2026
(51) Int. Cl.: B01D 19/00

(54) **IN LINE DEGASSING METHOD OF FLUID REACTIVE RESIN AND RELATED APPARATUS**

(30) Priority: 04.03.2025 IT 202500004434
(71) Applicant: Cannon Legos SpA, 20068 Peschiera Borromeo (MI) (IT)
(72) Inventor: VOLPATO, Marco, 20068 Peschiera Borromeo (MI) (IT); NAVA, Claudio, 20068 Peschiera Borromeo (MI) (IT)
(74) Representative: Botti & Ferrari S.p.A.

(57) **Abstract**

An in line degassing method (100) of fluid reactive resin for a dosing and mixing apparatus in mixing plants for reactive resins and reaction vacuum infusion and moulding is described, wherein fluid reactive resin is processed in a vacuum container (2) to release dissolved or dispersed gases.

Said method (100) comprises the following steps:
- heating (101) the fluid reactive resin before introducing it into the container (2) to lower the viscosity thereof;
- feeding (102) the fluid reactive resin in at least one inlet (6) of the container (2);
- sprinkling (103) the reactive resin inside said container (2) and close to an upper section (8) of the container (2);
- percolating (104) the sprinkled fluid reactive resin through a three-dimensional filter for dividing and diverting flows (9, 9');
- collecting (105) a volume 24 of degassed resin in the bottom volume of the container (2);
- taking away (111) the fluid reactive resin subjected to degassing from a bottom (11) of the container (2) to feed a supply to the dosing and mixing apparatus in a control mode substantially contemporary or synchronized with the step of feeding (102) the fluid reactive resin into the at least one inlet (6) of the container (2).

A related apparatus is also described.

## Description

### Field of application

The present invention relates to an in line degassing method of fluid reactive resin, and a related apparatus.

The invention finds application in particular in the manufacture of composite structures impregnated with specific resins.

The following description is made with reference to this field of application with the only purpose of simplifying the exposition thereof.

### Prior art

As is well known, for the impregnation of composite structures formed by layers of inorganic or organic synthetic fibres, for example carbon fibres or glass fibres or basalt fibres or others, even in mutual combination, resins mixed with their own reagents are used which, following said mixing, perform a chemical reaction and cure, within a certain time interval, forming the solid impregnating agent that fills the spaces between the fibres, bonds them and makes them integral with each other.

This completes and maintains the shape of the products, transfers stresses between one fibre and the other ensuring the mechanical performance of the item.

Therefore, the product is manufactured by preparing several layers of fibres in a mould that provides the external shape, closing the layered fibres in said mould and injecting the impregnating agent under pressure or, more commonly, it may be manufactured by suitably layering the fibres in a support mould, covering then the fibres with a sheath, called in the technical jargon "barrier bag", tightly sealed and applying suction in this container up to form a vacuum to release the air present therein.

When vacuum is applied, this "barrier bag" settles on the fibres due to the difference between the external atmospheric pressure and the internal vacuum, i.e. between the atmospheric pressure and the internal negative pressure, and said difference draws the resin, already mixed with the reagent, into the impregnation cavity.

This technology is called "Vacuum Resin Transfer Moulding" or "Vacuum resin transfer impregnation technology" and it is widely used to form medium-to-large-sized composite items.

The reactive resins applied in this process are usually taken away from separate containers and dosed by specific dosing systems through servo-driven positive-displacement pumps that just dose them in a stoichiometric ratio and send them, through separate pipes, to a dosing and mixing apparatus or a mixing head.

In the mixing head the resins are usually shared in a mixing duct where they are thoroughly mixed by a static or dynamic mixer.

Upon exiting the dosing and mixing apparatus, the resins, in which a slow reaction begins to occur, may be inserted into a small collecting volume, usually closed off from contact with the atmosphere, for example a flexible bag, from which one or more conduits depart which carry the reactive resin to one or more points for insertion into the vacuum cavity sealed by the "barrier bag" in which the reactive resin flows due to the pressure difference between the position at the mixing head outlet and the "barrier bag" inside.

However, throughout this process, a drawback due to the formation of gas bubbles during the vacuum transfer process is common.

Specifically, the reactive resins, taken away from their own containers to be mixed and sent into the vacuum volume inside the "barrier bag", may contain atmospheric gases that may have dissolved in the liquid during the production, transport and various handlings before mixing. Once the resins are subjected to pressures that are lower than the atmospheric one, said dissolved gases tend to escape from the resins themselves and form gas bubbles that, under vacuum, also expand in the form of foam.

For this reason, due to mutual coalescence, they form numerous voids, even centimetres in size, dispersed throughout the resin matrix or concentrated in some areas of the item once the resins have solidified.

Therefore, the presence of bubbles creates areas in which the resin matrix does not bind the fibres, damaging the mechanical strength of the items and the surface thereof.

Therefore, a common and highly felt problem in the field is to release the dissolved gases, before dosing and mixing them, through a degassing process and also to prevent the above gases from coming again into contact with the reactive resins before they solidify.

To degas the resins they must be subjected to a vacuum condition, for the time required to allow gas bubbles to form and to release said bubbles by bursting them on the liquid surface, before dosing and mixing them.

From a physical and chemical point of view, the reactive resins are viscous liquids having surface activity, and if they are simply deposited in bulk in a vacuum tank, the gas bubbles that form in the liquid thickness take a long time to rise up to reach the surface.

Moreover, on the surface, they encounter a foam layer that forms when vacuum is applied due to surface activity, which further slows down the release of gases inside the bubbles.

Under these conditions, the degassing process is extremely low requiring the entire volume to be kept under vacuum for very long times.

This process is thus not suitable for an industrially valuable process.

In order to make degassing industrially applicable, the most common process is the so-called "batch" one.

The reactive resins are loaded each in a sufficiently large container, in which vacuum is created and said resins are recirculated, through pumps, towards suitably arranged surfaces in the upper part of the tank, above the liquid level, so as to expose a thin layer of resins to vacuum while they flow on said surfaces for a time limited to the migration to the surface exposed to vacuum of the gas bubbles that form due to the very reduced pressure.

Once the gases are removed, the resins are made available for mixing and used by the dosing unit that mixes them and sends them to the above-mentioned "barrier bag" for the impregnation of the item being produced.

However, this process has a practical problem in that the degassed resins must be prepared hours before the use thereof, thus requiring a specific apparatus with large tanks and a management that must be scheduled and managed in advance as a function of the quantities of resins to be used after the degassing process.

Moreover, two degassing plants are often required since, while one supplies the impregnation process, the other prepares the new "batch" quantity of degassed resins.

Therefore, the currently used solutions are not sufficiently suited to an optimal and practical resolution of the problems arising from the need to avoid the formation of gas bubbles inside the fluid resins in the reaction step.

The technical problem dealt with in the present invention is thus to devise a technical solution that solves said problems without incurring prior art drawbacks.

The object of the invention is also to provide a solution that allows degassing to be applied to the quantity of resin required for the ongoing impregnation process without having to adopt an apparatus that is different and separate from the vacuum mixing and transfer plant.

A further object of the invention is to provide a solution that can also be implemented in prior art systems, the modifications to be made not affecting in a particularly significant manner the overall modification of production plants, production times and costs.

Finally, an object of the invention is to provide an optimal solution in terms of production times and costs.

### Summary of the invention

The solution idea underlying the present invention is to provide an in line degassing, that is a solution in which the resins are directly taken away from the transportable containers thereof (drums, cupolas, IBCs or "Isotankers" for large-sized plants) and are directly degassed in line with and during the supply to the dosing and mixing plant.

In other words, the idea is a process in which, during the transfer from the transportable container or even from fixed tanks, supplied as needed, the reactive resins are degassed in line, that is along the path between the container and the dosing and mixing plant, ready to then flow drawn by the vacuum towards the item to be formed by vacuum infusion.

Based on said solution idea the technical problem is solved by an in line degassing method of fluid reactive resin for a dosing and mixing apparatus for reactive resins and reaction vacuum infusion and moulding, wherein said fluid reactive resin is processed in a vacuum container to release the gases dispersed or dissolved therein.

Said method is characterized by comprising the steps of heating the fluid reactive resin before introducing it into the container to lower the viscosity thereof, feeding the fluid reactive resin into at least one inlet of the container, sprinkling the reactive resin inside the container and close to an upper section of the container, percolating the sprinkled fluid reactive resin through a three-dimensional filter for dividing and diverting flows, collecting a volume of degassed resin at a collecting volume and taking away the fluid reactive resin subjected to degassing from the collecting volume of the container to feed at least one supply to the dosing and mixing apparatus in a control mode substantially contemporary or synchronized with the step of feeding the fluid reactive resin into the at least one inlet of the container.

Advantageously, the present solution uses a sequence of different steps to cause the resin reach first of all an ideal state, controlling the temperature thereof, to be fed into a vacuum container in which it is primarily uniformly distributed and then percolated into a grid in which, due to the fact of having been so distributed and also slowed in its own flow, it remains for the time required to expose a lot of surface to vacuum and unmix or release dispersed gas bubbles breaking, by passing along said grid, the surface tension of gas bubbles that are present allowing the release thereof in the atmosphere inside the container before being taken away downstream thereof to supply the dosing and mixing apparatus.

Preferably, the method according to the invention further comprises a step of continuously controlling a filling level of the container.

Advantageously, it is thus possible to verify that the tank maintains the internal resin level within predetermined limits.

Preferably, the method according to the invention further comprises a step of recirculating at least one portion of the fluid reactive resin from the collecting volume to the inlet of the container.

Advantageously, the further implementation of this step allows the outlet flow to be adjusted in a different manner in case of a different resin demand from the dosing and mixing apparatus or a double passage through the three-dimensional filter for dividing and diverting flows to be set for particular applications or simply for safety reasons.

Preferably, the method according to the invention further comprises a step of controlling the step of feeding the fluid reactive resin into the at least one inlet of the container as a function of the use of the fluid reactive resin in the dosing and mixing apparatus.

Still preferably, the method according to the invention further comprises a step of controlling the step of taking away the fluid reactive resin subjected to degassing from the collecting volume of the container as a function of the use of the fluid reactive resin in the dosing and mixing apparatus.

Advantageously, due to one or both these steps it is possible to verify that the inlet feeding and the outlet taking away are properly balanced in response to the ongoing resin demand.

According to a further aspect of the present invention, an in line degassing apparatus of fluid reactive resin for a dosing and mixing apparatus in mixing plants for reactive resins and reaction vacuum infusion and moulding is provided, generally configured to implement the above-described method.

Said apparatus comprises a vacuum container to release the dispersed or dissolved gases in a fluid reactive resin, a feeding system of fluid reactive resin into the container, a temperature control system associated with the feeding system, a sprinkler to distribute the fluid reactive resin inside the container and close to an upper section of the container, a three-dimensional filter for dividing and diverting flows inside the container and downstream of the sprinkler, a collecting volume in a lower section downstream of the three-dimensional filter for dividing and diverting flows and a taking-away system of fluid reactive resin at the collecting volume of the container.

Advantageously, the present apparatus comprises a temperature control system that maintains the solubility of gases in liquids according to the Henry's law at a desired level, to have then the filtration through the two components inside the vacuum container that allow the real degassing.

Preferably, the collecting volume is provided in a section downstream of the three-dimensional filter for dividing and diverting flows close to a bottom of the container.

Advantageously, this allows to create a small temporary collection of degassed resin comprised on the bottom whose level generates a signal that allows the input flow rate to be accelerated to maintain a minimum head or to be slowed to prevent an excessive filling.

Nothing prevents to provide the collecting volume outside the container.

Preferably, the sprinkler comprises a sheet perforated along parallel lines.

Advantageously, said solution is technically simple to implement but at the same time it optimizes the sprinkling uniformity inside the next three-dimensional filter for dividing and diverting flows.

In a preferred embodiment, the three-dimensional filter for dividing and diverting flows comprises a three-dimensionally developed metal mesh.

Advantageously, said solution allows a very simple management of the mesh density and, moreover, allows the mesh to be easily handled and moved given its adaptability to the container shape and its light weight, which is also very advantageous in the maintenance and/or replacement steps.

Alternatively, the three-dimensional filter for dividing and diverting flows comprises a plurality of randomly arranged metal rings.

Said solution is more complex than the previous one in terms of management of the plurality of rings, but it advantageously allows an easy variation of the internal density.

Preferably, the three-dimensional filter for dividing and diverting flows has an apparent, or "bulk", density of filter elements between 40 kg/m³ and 500 kg/m³.

More preferably, the three-dimensional filter for dividing and diverting flows has a full space to empty space ratio between 1% and 8%.

Advantageously, from tests carried out by the Applicant, this range appears to be optimal with regard to the main quality of gas bubble breaking.

Still preferably, the upper section of the container comprises a tilted surface with a conical development to feed the sprinkler and manage a laminar flow for feeding the fluid reactive resin.

Advantageously, this allows the impact of the inlet flow with the sprinkler to be prevented, causing the resin to pour onto the tip of a conical-cap-shaped element, with a conicity with a total opening angle preferably between 90 degrees and 150 degrees, and concentric with the sprinkler. The inlet resin is distributed on the cone forming a film peripherally pouring onto the sprinkler. The formation of bubbles and foam resulting from a preliminary degassing step begins along the film on the cone.

Preferably, the degassing apparatus according to the invention further comprises a vacuum pump and/or a vacuum storage tank with the additional function of decanting fumes or vapours taken away from the container, the vacuum pump and/or vacuum storage tank being adapted to achieve the vacuum condition of the container.

Advantageously said solution is optimal for creating the vacuum and maintaining it without drawbacks.

Preferably, the temperature control system comprises at least one electrical resistance thermal exchanger and a closed loop control downstream of the exchanger with PID regulation.

This allows a heating sizing to be obtained in an optimal manner with an exchange power required to increase the resin temperature for the expected peak consumption, also considering the thermal exchange with the environment and the thermal inertia of the mechanical devices containing it within a range from 50°C to 100°C.

However, nothing prevents to adopt the thermal exchange with a heating liquid, for example.

Under non-feeding conditions of the vacuum tank the resin is recirculated for temperature thermal conditioning.

Still in a particular embodiment, the degassing apparatus according to the invention further comprises an accessory storage tank connected to the collecting volume of the container.

Advantageously, in case of reduced demand from the dosing and mixing apparatus, a small storage tank may be provided, in which the already degassed resin may be stored when not yet required.

Preferably, the degassing apparatus according to the invention further comprises a control logic based on a programmable logic controller (PLC) and adapted to adjust the flow rate according to degassed resin collecting level signals, and further corrected by a feedforward signal or adapted to adjust a taking-away flow rate according to supply request signals to an accessory tank to the dosing and mixing apparatus.

Advantageously, it makes the inlet flow rate correlated with the taken-away one, and is generally modulated by the signal of the level sensor positioned close to the bottom which also affects the taken-away flow rate, preferably with a maximum percentage correction of 30% of the taken-away flow rate.

The logic also controls the resin preheating temperature by controlling the temperature of the temperature control system and controls the vacuum value to prevent the residual pressure from rising above a set value. If it is exceeded the inlet flow rate is reduced.

More preferably, the degassing apparatus according to the invention further comprises two minimum and maximum filling level sensors of the container.

Advantageously, this allows on the one hand to verify a possible excessive filling and on the other hand to prevent the container from being emptied.

Still preferably, the degassing apparatus according to the invention further comprises a fluid transfer pump from the collecting volume of the container.

Advantageously, it is adjusted by a flow rate reference from the control logic that receives an input of the degassed resin request downstream of degassing or by a set flow rate reference. The taking away is generally interrupted if the liquid in the tank downstream of the pump reaches the maximum level.

Preferably, the degassing apparatus according to the invention further comprises a feed pump of the container.

Advantageously, it is adjusted as a function of the request of the dosing and mixing apparatus, generally limiting the flow rate to the maximum capacity of the degassing system that depends on the degassing performance as a function of the type of resin and on the viscosity thereof.

Preferably, the degassing apparatus according to the invention further comprises a recirculation line downstream of the taking-away system.

Advantageously, said solution allows to perform the adjustment of the outlet flow in a different manner.

Preferably, the container is cylinder-shaped with a vertical revolution axis with the semi-elliptical, hemispherical or flat closing plates.

Advantageously, said solution is optimal from a construction point of view.

However, nothing prevents to use other shapes with the same functionalities.

The features and advantages of the method and apparatus according to the invention will be apparent from the following description of exemplary embodiments given by way of not-limiting example with reference to the attached drawings.

### Brief description of the drawings

In the drawings:
- Figure 1 shows a schematic view of an in line degassing apparatus of fluid reactive resin manufactured according to the present invention;
- Figure 2 shows a sectional schematic view of a vacuum container for the in line degassing apparatus of Figure 1;
- Figure 3 shows an exploded schematic view of a vacuum container for the in line degassing apparatus of Figure 1;
- Figure 4 shows a perspective schematic view of a component for a vacuum container for the in line degassing apparatus of Figure 1;
- Figure 5 shows a perspective schematic view of a component for a vacuum container for the in line degassing apparatus of Figure 1;
- Figure 6 shows a perspective schematic view of an alternative component to Figure 5 for a vacuum container for the in line degassing apparatus of Figure 1;
- Figure 7 shows a schematic block diagram of an in line degassing method of fluid reactive resin for a dosing and mixing apparatus in mixing plants for reactive resins and reaction vacuum infusion and moulding.

### Detailed description

With reference to the figures an in line degassing method of fluid reactive resin and an in line degassing apparatus of fluid reactive resin for a dosing and mixing apparatus in mixing plants for reactive resins and reaction vacuum infusion and moulding according to the present invention are described, globally indicated with method 100 and apparatus 1.

It should be noted that the figures are schematic views and are not drawn to scale, they are instead drawn so as to characterize and emphasize the important features of the invention. Furthermore, in the figures, the different components are schematically represented, the shape and size thereof being changeable as a function of the desired application. Moreover, particular arrangements illustrated in a Figure in relation to an embodiment may also be used in one or more embodiments illustrated in the other figures.

Furthermore, elements that are structurally and functionally identical in the different figures, and particularly similar to prior art solutions as described above, are indicated below with the same alphanumeric references.

In the following description, relative terms such as "above", "below", "upward", "downward" will be used referring to the figures only to simplify the exposition thereof.

Finally, indications of particular geometries (circular, rectangular) or of the arrangement of the elements (parallel, orthogonal, contiguous) as well as the term "substantially" are always to be intended in connection with physical and not geometrically abstract elements, and thus they must always consider the tolerances of representation introduced by the transition from a world of images schematized in a pure mathematical/geometric manner to the real world.

The apparatus 1 comprises a vacuum container 2 to activate the release of the gases dispersed or dissolved therein, a feeding system 3 of fluid reactive resin into the container 2 and a temperature control system 4 associated with the feeding system 3.

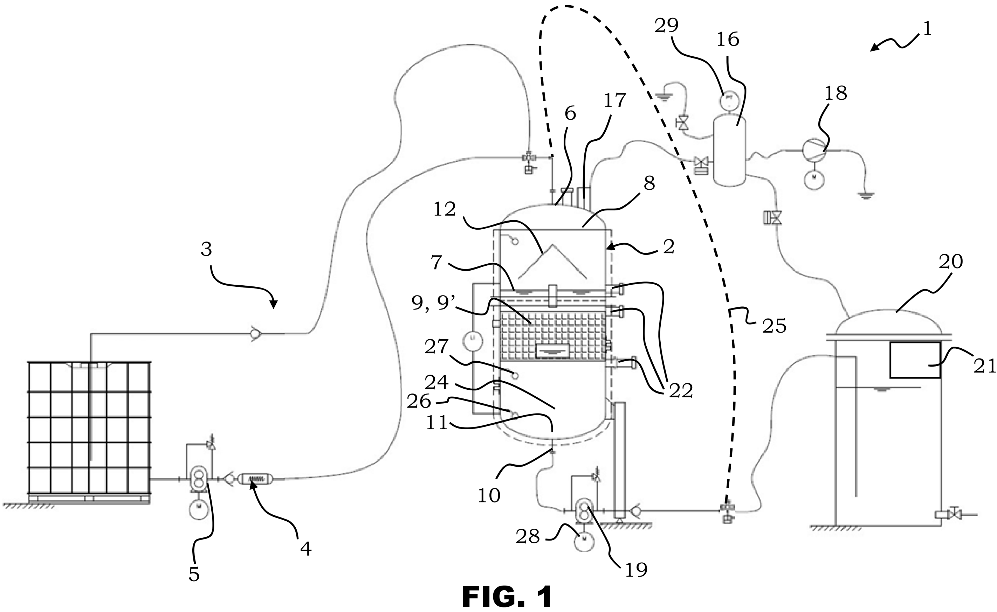

In the embodiment shown in Figure 1, the feeding system 3 provides that the resin is taken away from a tank that is suitable for transport, for example an intermediate container for bulk products (or "Intermediate Bulk Container-IBC"), for example from a temporary storage tank.

Always in the exemplary and not-limiting embodiment, the resin is fed to the container 2 for degassing through a positive-displacement feed pump 5 whose flow rate is controlled by the regulation of the speed performed by an electric motor and an inverter.

The flow rate which the apparatus 1 is sized for is higher than the average flow rate of use of the single resin.

Downstream of the feed pump 5 to the container 2 the temperature control system 4 is installed, comprising a heat exchanger that heats the fluid as it passes.

In the present embodiment heating is performed and controlled by electric resistances.

Alternatively, nothing prevents to provide a heating performed by a heating liquid.

Under non-feeding conditions of the vacuum container 2 the resin may be recirculated for temperature thermal conditioning via a recirculation line 25.

Heating is generally sized with an exchange power required to increase the resin temperature for the expected peak consumption, also considering the thermal exchange with the environment and the thermal inertia of the mechanical devices containing it within a range from 50°C to 100°C.

In the present embodiment, the temperature regulation is controlled by a closed loop system that controls the quantity of thermal energy supplied to the exchanger through PID regulation of the resin temperature measured at the outlet of the outlet exchanger.

The outlet temperature is set as a function of the resin viscosity features, whose temperature is increased to a value that causes the viscosity thereof to decrease to a value of less than 150 centipoises (cps). In fact, according to the Henry's law, the solubility of a gas in a liquid is directly proportional to the pressure that the gas exerts on the solution and according to Le Chatelier's principle, the solubility of gases in a liquid decreases as temperature increases. Therefore, said viscosity limit is considered to ensure that, by subjecting the resin to vacuum during the degassing process, the bubbles that form by separation and gas release are quickly released from the liquid surface and further that the membranes thereof break in the process time releasing the gases contained while passing through the vacuum container 2.

The container 2 is under vacuum conditions through a pump 18 and/or vacuum storage tank 16, preferably connected to the upper part of the container 2 by a vacuum end 17, directly acting through on/off valves or valves for regulating vacuum i.e. the negative pressure with respect to the atmospheric pressure applied to the vacuum container 2.

The container 2 may also be equipped with a vacuum gauge to verify the vacuum level.

The container 2 comprises at least one inlet 6 through which the fluid reactive resin is fed on the upper part of the container.

The vacuum condition is maintained due to the fact that the container 2 is made tight and constructed so as to be sealed from the external atmosphere and to withstand the pressure difference between the outside and the inside.

The container 2, mainly for construction reasons, as can be seen in the attached Figures, is preferably cylinder-shaped with a vertical revolution axis with the semi-elliptical, hemispherical or flat closing plates.

The container 2 may be equipped with a jacket having a temperature controlled by appropriate electrical resistances to maintain the resin at the set process temperature.

Nothing prevents to prefer different configurations that may ensure at least the same functionality.

In the present embodiment, a sprinkler 7 to distribute the fluid reactive resin close to an upper section 8 of the container 2, a three-dimensional filter for dividing and diverting flows 9, 9' downstream of said sprinkler 7, a collecting volume 24 and a taking-away system 10 of fluid reactive resin at a bottom 11 of the container 2 are provided inside the container 2.

Nothing prevents to provide embodiments in which the collecting volume 24 is outside the container, said alternative being comprised within the scope of the attached claims.

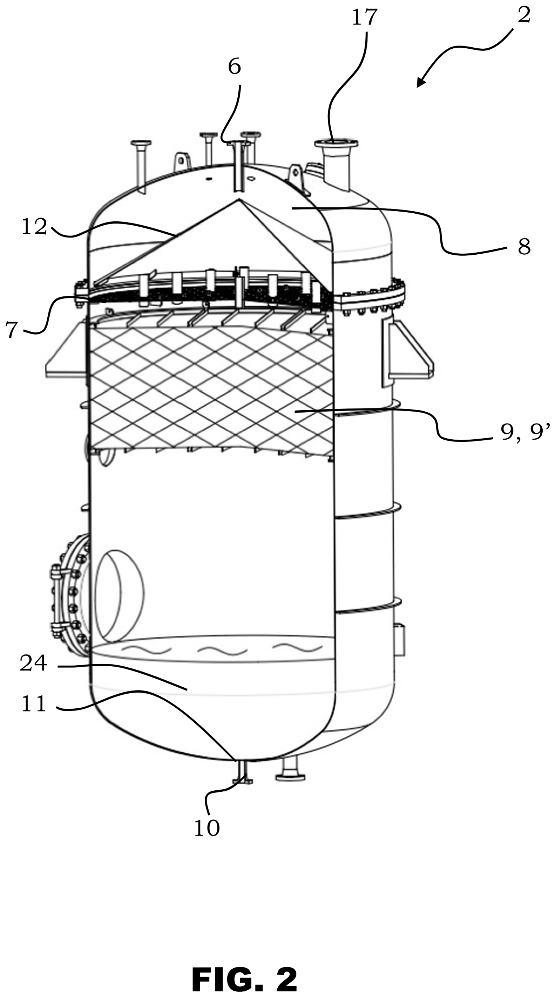

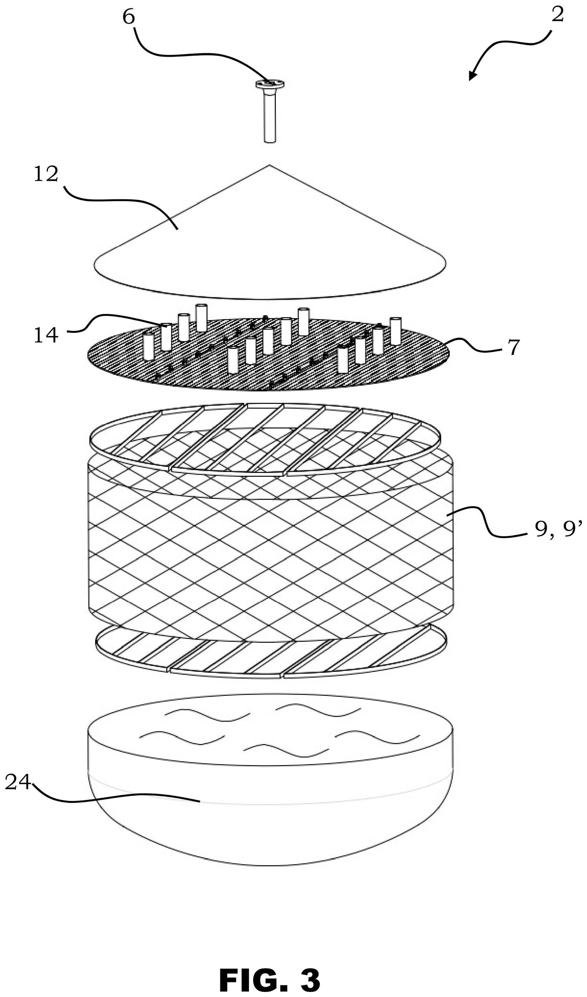

As can be seen in particular in Figures 2 and 3, downstream of the inlet 6 of the container 2, comprising a feeding port with an external shut-off valve, the flow of fluid reactive resin is directed on at least one tilted surface 12, which in the present case of a cylindrical container, appears as a conical surface.

Said tilted surface 12 allows to prevent the impact of the inlet flow onto the sprinkler 7 but to feed said sprinkler through a laminar flow so as to avoid incorporating air, causing the resin to pour onto the tip of said "conical-cap-shaped" tilted surface 12 with a conicity angle preferably between 90° and 150° and preferably supported concentrically with the sprinkler 7.

The inlet resin is distributed on the tilted surface 12 forming a film peripherally pouring onto the sprinkler 7 and the formation of bubbles and foam resulting from a preliminary degassing step begins along said film.

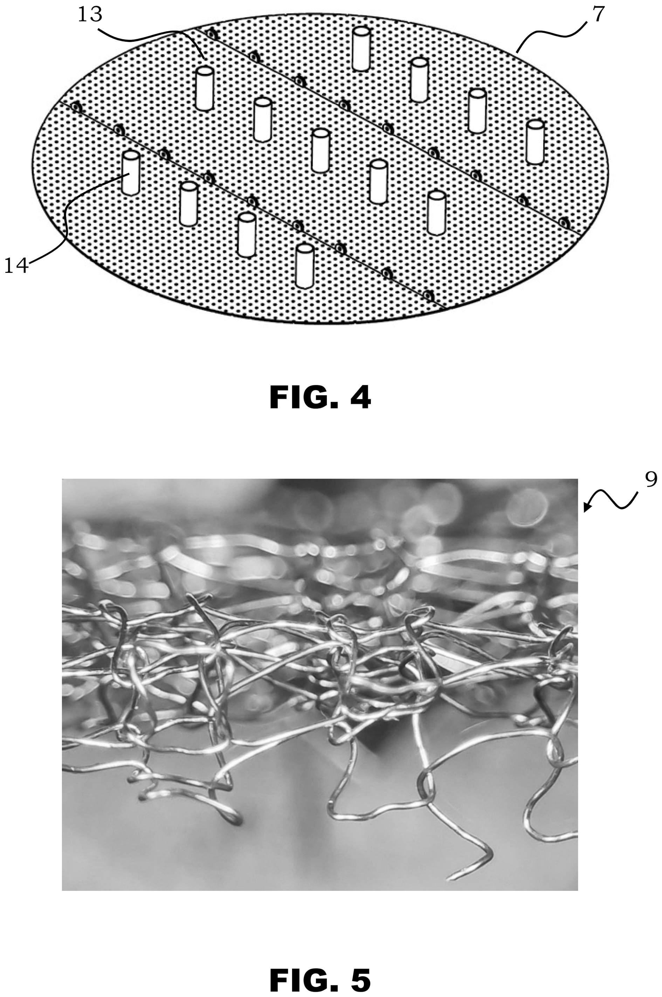

In the embodiment specifically represented in Figure 4, the sprinkler 7 comprises a sheet perforated along parallel lines. The distance between holes 13 may generally be between 20 mm and 70 mm and is generally uniform so as to ensure an optimal product distribution.

Based on the design resin nominal flow rate, the number and the diameter of the holes 13 are calculated by considering a resin head above the sprinkler 7 between 1 cm and 10 cm of product where the minimum height is calculated for a design minimum flow rate and the maximum height for the design maximum flow rate. The sprinkler 7 is thereby always filled with a desired fluid resin level providing a smooth sprinkling from all holes 13.

Moreover, the sprinkler 7 has vacuum transfer through ducts 14 with a cut-off height that is higher than the head formed by the resin at the maximum flow rate thereof, generally more than 12 cm, adapted to transfer the vacuum from the upper section of the container 2 to the lower part of the container 2 and vice versa so as to transfer the gases extracted from the resin from the lower section to the upper section where they are extracted through the vacuum pump.

Moreover, the sprinkler 7 may be surrounded by a cylindrical frame (not shown) with a height of more than 10 cm and lower than vacuum transfer ducts 14.

As mentioned, the three-dimensional filter for dividing and diverting flows 9, 9' with resin flow division and diversion function is provided downstream of the sprinkler 7.

The three-dimensional filter for dividing and diverting flows 9, 9' as represented by way of non-limiting example, is a cylindrical block installed under the sprinkler 7, from which the resin pours.

The shape of the three-dimensional filter for dividing and diverting flows 9, 9' divides and diverts the resin sprinkling flows in several microflows allowing a wide surface of the resin, percolating inside this three-dimensional filter for dividing and diverting flows 9, 9', to be exposed to vacuum. Vacuum, i.e. a pressure that is much lower than the atmospheric one, causes the separation and release of the gases dissolved and dispersed in the resin flows and consequently the formation of foam inside the three-dimensional filter for dividing and diverting flows 9, 9'.

The exposure to vacuum of both the resin flows and the foam and the features of the grid inside the core, characterized by a high surface to vacuum volume ratio, in addition to dividing the flows of pouring liquid, causes the breaking of the membranes of the bubbles that form the foam making it efficient to remove the gases that, once released, flow upward through the sprinkler 7 where the released gases pass through the vacuum transfer through ducts 14 from the sprinkling plane and are then sucked by the vacuum pump 18.

The efficiency of this process allow degassing during a single passage through said three-dimensional filter for dividing and diverting flows 9, 9'.

Descending along the three-dimensional filter for dividing and diverting flows 9, the single resin flows collide with the mesh of the three-dimensional filter for dividing and diverting flows 9, 9', break up and tend to expand and descend along the entire height of the three-dimensional filter for dividing and diverting flows 9, 9' flowing along the wires and jumping from one wire to the other.

Meanwhile, the liquid resin, subjected to vacuum, develops gases that form foam.

The foam has a rheological behaviour, i.e. the volume or "apparent" viscosity thereof depends on its own internal flow motions considerably increasing when the flow is stationary or very slow in contact with the surfaces of the single wires making up the mesh but also considerably decreasing in contact with the flow of liquid flowing, so that, actually, said rheological behaviour slows down the passage of the liquid resin through the mesh but also decreases the volume or "apparent" viscosity of the foam and thus increases the breaking speed of the membranes that form the single foam bubbles.

Therefore, the mesh has the ability to trap the foam and stop or greatly slow down the descent thereof along the thickness of the three-dimensional filter for dividing and diverting flows 9, 9'.

Moreover, the foam descends very slowly due to the low density and high volume or "apparent" viscosity.

The presence of trapped foam slows in turn the descent of the liquid that, in this process, meets both other almost stationary liquid, whose boundary layer settles on the single wires, and the surface of foam bubbles flowing very slowly.

When the membranes of the foam bubbles break, they release the gases that rise upward sucked through the vacuum transfer ducts 14 and thereby also create a flow that counteracts the foam descent, further divides it and makes the process even more effective.

According to an exemplary embodiment shown in Figure 5, a three-dimensional filter for dividing and diverting flows 9 shaped as a three-dimensionally developed metal mesh may be provided. It is spirally wound and compressed enough to be sufficiently compacted in the section of the container 2.

If the container 2 has sections that are larger than the single roll, the three-dimensionally developed metal mesh may be adapted by composing and compressing therebetween rolls of smaller diameter placed side by side.

The three-dimensionally developed metal mesh is formed by the enveloping of stainless steel wires that are knitted with a shape adapted to form a three-dimensional grid developing as a thick ribbon, with a thickness generally between 5 mm and 60 mm and a width generally between 200 mm and 1200 mm. The length is obtained by the weaving process as needed.

The most practically conformable type of mesh, for example using an automatic metal knitting machine, has a straight and reverse omega-shaped type of stitch on two layers.

However, other types of mesh with a three-dimensional extension may be suitable for the same functionality. They must produce a ribbon with a certain thickness that, when spirally wound, ensures a mesh density value and a specific solids to voids ratio. The wound spirals must be compressible to be adapted to the section of the container 2 in which they are inserted and to form a block for exposure to vacuum that has no vertical spaces between one spiral and the other.

Therefore the three-dimensional filter for dividing and diverting flows 9 is made of at least one or more compressed spirals placed side by side and stacked on multiple layers up to form the overall thickness of the three-dimensional filter for dividing and diverting flows 9 required to perform degassing even on a single passage.

However, nothing prevents to shape the core with mesh layers stacked on top of each other.

For degassing systems with diameters that are equal to or less than 600 mm the mesh ribbon is generally wound in concentric turns to form a compact coil that unwinds from the centre to a greater diameter than the container 2 and where it is inserted by compressing it by 2% to 20% of the diameter to increase the apparent or "bulk" density thereof.

The height of the three-dimensional filter for dividing and diverting flows 9 depends on the passage speed of the product as a function of the viscosity thereof and the slowing effect produced by the volume viscosity of the foam.

Multiple turn sections may be overlapped to form a three-dimensional filter for dividing and diverting flows 9.

For three-dimensional filters for dividing and diverting flows 9 that have to be inserted in diameters of more than 400 mm, it is preferable to spirally wind the mesh ribbon into circular sections that, once placed side by side and compressed, fill the entire section of the container 2.

The mesh may be thickened by changing the size of the single woven stitches.

Advantageously, the present embodiment allows on the one hand a very simple management of the mesh density and, moreover, it allows the mesh to be easily handled and moved given its adaptability and light weight, which is also very advantageous in the maintenance and/or replacement steps.

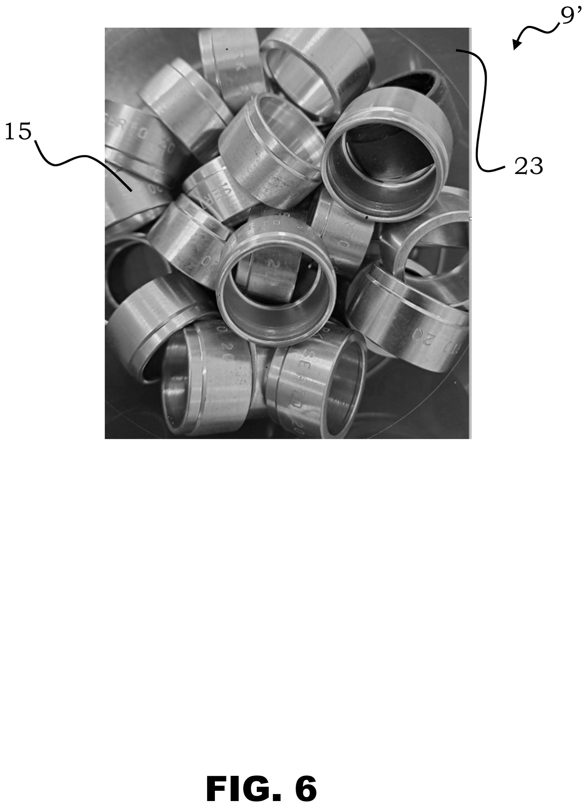

According to an alternative exemplary embodiment shown in Figure 6, a three-dimensional filter for dividing and diverting flows 9' comprising a plurality of randomly arranged metal rings 15 may be provided.

Preferably, said plurality of metal rings 15 is inserted into a casing 23, inserted in turn in coupling with the internal section of the container 2 so as to leave no space for the resin to pour along any peripheral coupling clearance.

Preferably, the metal rings 15 have a thickness of less than 1/5 of the external diameter and a length that is not greater than the internal diameter.

Said solution is more complex than the above one in terms of managing the plurality of rings, but it advantageously allows an easy variation of the internal density.

Both in the first embodiment comprising a three-dimensionally developed metal mesh, and in the one comprising a plurality of metal rings 15, the three-dimensional filter for dividing and diverting flows 9, 9', according to tests carried out by the Applicant, in order to optimize the degassing function thereof is characterized as a function of the apparent density that is preferably varied between 40 kg/m³ and 500 kg/m³.

In the case of a three-dimensionally developed metal mesh, the variation may be obtained both by thickening the geometry of the points and by varying the wire diameter, that may vary, for example, between 0.15 mm and 0.45 mm in diameter.

The full space to empty space ratio, which represents the percentage of relative filling volume, may vary from 1% to 8%.

With these features the degassing volume may be set as a function of the nominal flow rate that may thus vary from 0.020 m³ per litre/minute to 0.05 m³ per litre/minute.

This characterization was carried out with experimental tests carried out on three-dimensional filters for dividing and diverting flows 9 made of a straight and reverse omega-shaped mesh in two layers of stainless steel with a diameter of 0.25 mm with types of increasingly thicker mesh stitches and the relative values are shown in the following table as function of the apparent density of the mesh wound on cylinders:

| Type | Apparent density | Wire diameter | Material | Wire external surface | Solid/void ratio (%) |
|---|---|---|---|---|---|
| 160 | 80 kg/m³ | 0.25mm | SS316L | 162 m²/m³ | 1% |
| 240 | 120 kg/m³ | 0.25mm | SS316L | 242 m²/m³ | 1.5% |
| 380 | 190 kg/m³ | 0.25mm | SS316L | 384 m²/m³ | 2.5% |
| 415 | 207.5 kg/m³ | 0.25mm | SS316L | 420 m²/m³ /m³ | 2.6% |
| 715 | 357.5 kg/m³ | 0.25mm | SS316L | 723 m²/m³ | 4.5% |

The values shown in the table are the total surface of the wire used and show the wire external surface per cubic metre of uncompressed mesh.

Similarly, for cores filled with rings the surface of the rings is considered.

More preferably, a vacuum storage and decanting tank 16 may be interposed between the vacuum pump 18 and the container 2 to capture any liquid entrainment during suction, preferably connected to a vacuum pressure transducer 29.

The elements inside the container 2 may be inserted through flanges with upper vacuum seals of the container 2 or, alternatively, through intermediate flanges along the shell of the cylindrical container 2 or through a manhole of the container 2 in case of large-sized installations.

In case of flanges along the shell the height of junction flanges may be along the entire shell preferably at a height of more than 70% of the height of the shell itself.

Downstream of the three-dimensional filter for dividing and diverting flows 9, 9' there are, as mentioned, a collecting volume 24 of degassed resin and a taking-away system 10 of fluid reactive resin at a bottom 11 of the container 2.

Said collecting volume 24 allows to create a small temporary collection of degassed resin whose level generates a signal that allows the input flow rate to be accelerated to maintain a minimum head or slowed to avoid an excessive filling.

Preferably, the head is maintained within a range between 50 mm and 600 mm.

The volume 24 of the container 2 is preferably equipped with level transducers 26, 27 and a minimum level sensor to prevent the container 2 from being emptied.

Moreover, a fiber-optic camera 22 may be provided to control the liquid surface and verify the head formation in the sprinkler 7 and the foam formation thereon. One or more fiber-optic viewers equipped with of crown lighting may also be used to verify the surfaces of the liquids and the surface of the three-dimensional filter for dividing and diverting flows 9, 9'.

Furthermore, a fluid transfer pump 19 is provided, associated with the bottom 11, or generally with the collecting volume 24 if external to the container 2, which transfers the degassed resin outside the container 2 to directly serve the resin containers 20 of the dosing unit.

The taking away from said collecting volume 24 may directly feed at least one of the resin containers 20 of the dosing unit that uses said reactive resins which, for example, in the infusion of wind turbines, usually do not have tanks associated with the dosing units.

In the represented preferred embodiment, it is further provided that, downstream of the container 2, at least one additional accessory storage tank 21 of degassed resin is arranged, by way of example but not limited to, comprised in the resin container 20, such as the tanks associated with the dosing units, with the function of ensuring the feeding thereof even under variable consumption conditions, for example due to interruptions in dosing and mixing or due to a consumption peak that is higher than the average one for which the overall degassing system is sized or in case of a degassing interruption.

The accessory storage tank 21 may comprise, for example, a buffer tank or mobile tanks (IBC) to ensure a reserve of degassed product.

The fluid transfer pump 19 which manages the transfer of degassed resin from the container 2 directly to the accessory storage tank 21 may be controlled as a function of the level that is present in the collecting volume 24, for example at the bottom 11, of the container 2.

Alternatively, the transfer of the degassed resin may also occur by gravity, by positioning the container 2 at a higher height than the accessory storage tank 20.

Preferably, the apparatus 1 further comprises a control logic (not shown) based on a programmable logic controller (PLC) and adapted to adjust the flow rate according to degassed resin collecting level signals, and further corrected by a feedforward signal.

Specifically, the flow rate of the feed pump 5 is adjusted both as a function of the level in the container 2 of degassed resin that is collected in the collecting volume 24 at the bottom 11, and as a function of the flow rate of use.

Said feed pump 5 is thus adjusted as a function of the request of the overall reactive resin mixing and reaction vacuum infusion and moulding plant, however limiting the flow rate to the maximum capacity on the basis of the performance of the specific type of resin and of the viscosity thereof, a parameter generally set on the basis of preliminary tests.

The control logic adjusts the flow rate to be sent to the container 2 according to degassed resin collection level signals and is modulated as a function of the collection level in the tank.

It is adjusted to the maximum degassing flow rate up to a filling reference level of the collecting volume 24 of the container 2 and is then modulated to decrease as a function of the difference between the reference level and the maximum filling level.

The input flow rate of the feed pump 5 may also be corrected by a feedforward signal of the fluid transfer pump 19 so as to correlate the inlet flow rate with the taken-away one.

However, the control logic limits the maximum flow rate to the maximum capacity of the apparatus 1.

Moreover, the fluid transfer pump 19 is adjusted by a flow rate reference from the control logic that receives an input of the degassed resin request downstream of degassing or by a set flow rate reference. The taking away is interrupted if the fluid in the resin container 20 downstream of the fluid transfer pump 19 reaches the maximum level.

More specifically, preferably, in the container 2 at least one minimum level sensor 26 is provided, which sends a signal both acting to maximize the input degassing flow rate and acting on the taken-away flow rate with a maximum percentage correction of 30% of the taken-away flow rate.

Still more preferably, both a minimum filling level sensor 26 to prevent the container 2 from being emptied and a maximum filling level sensor 27 are provided.

The continuous level measurement is generally performed by at least one load cell 28 positioned on the container supports, but nothing prevents to use an immersed level transducer.

The control logic also affects the resin preheating temperature by controlling the thermal energy introduced by the temperature control system 4 and controls the internal absolute pressure value which must never rise above a set value.

The flow rate of each feed 5 or fluid transfer 19 pump is measured as a function of the rotational speed and volume per revolution of each pump. Nothing prevents to use flow rate transducers downstream of at least one pump.

Each pump is generally equipped with at least one pressure transducer on the delivery side for safety reasons.

Since the container 2 operates under vacuum, or generally with a very low internal absolute pressure, the resin might also be sucked directly from the container 2 due to the pressure difference, whereby the flow rate might be adjusted with a valve acting as a flow rate regulator, but an embodiment with a feed pump 5 is preferable to avoid too high inflows.

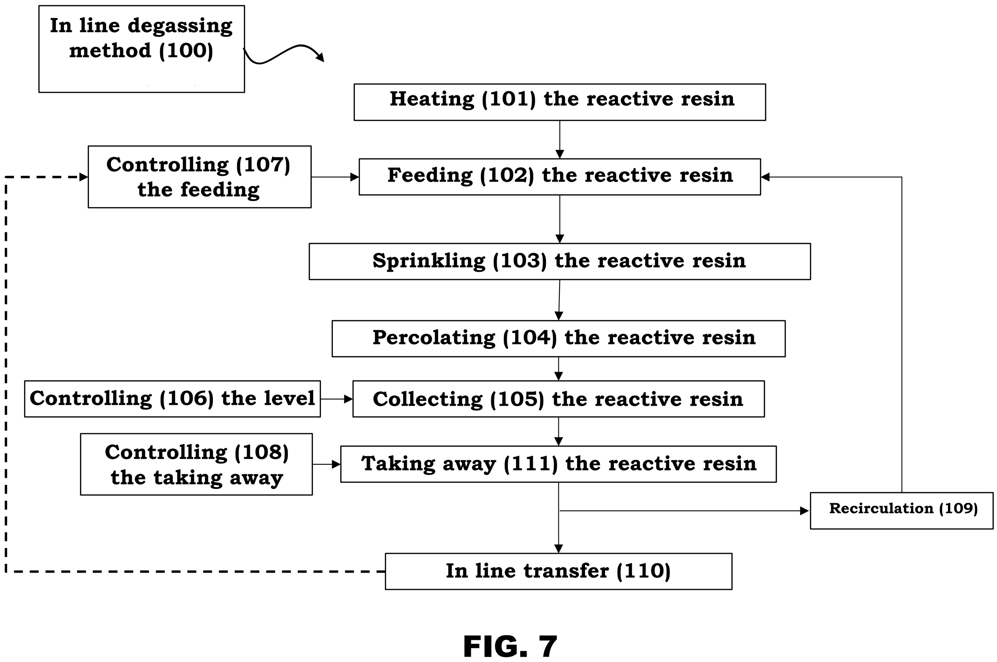

In accordance with the invention, and adopting the principles on which the above-described apparatus was designed, the method 100 has been developed for reactive resin dosing and mixing and reaction vacuum infusion and moulding plants and wherein the fluid reactive resin is processed in the container 2, for vacuum removal of dissolved and dispersed gases, schematized in Figure 7.

Said method comprises the steps of heating 101 the fluid reactive resin before introducing it in the container 2 to lower the viscosity thereof, feeding 102 the fluid reactive resin into the inlet 6 of the container 2, sprinkling 103 the reactive resin inside the container 2 and close to the upper section 8 of the container 2 and percolating 104 the sprinkled fluid reactive resin through a three-dimensional mesh filter for dividing and diverting flows 9, 9'.

Downstream of this process that allows the fluid reactive resin to be degassed, the method 100 provides for collecting 105 a volume of degassed resin in a collecting volume 24 of the container 2, preferably but not limited to, provided close to a bottom 11 of the container 2 but also allowed to be outside it, taking away 111 the fluid reactive resin from the collecting volume 24 of the container 2 to supply the dosing and mixing apparatus in line in a mode substantially contemporary or synchronized with the step of feeding 102 the fluid reactive resin into the inlet 6 of the container 2. The degassed resin may be thus transferred in line 110 directly to the plant of use.

Preferably, the method 100 also comprises a step of continuously controlling 106 a filling level of the collecting volume 24 of the container 2, a step of controlling 107 the step of feeding 102 the fluid reactive resin into the inlet 6 of the container 2 as a function of the use of the fluid reactive resin in the dosing and mixing apparatus, and a step of controlling 108 the step of taking away 105 the fluid reactive resin subjected to degassing from the bottom 11 of the container 2 as a function of the use of the fluid reactive resin in the dosing and mixing apparatus.

The three-dimensional filter for dividing and diverting flows 9, 9' is fixed in the section of the container 2 above the free surface of the collecting volume 24 of the resin that percolates and then forms said controlled-level volume on the bottom 11 of the tank and the method 100 allows to maintain said free surface, i.e. the level of the collecting volume 24 of degassed resin on the bottom 11 of the container 2, within filling limits by suitably controlling the inlet flow to the container 2.

Therefore, it is possible to control the refilling process to the container 2 and the transfer one to use, i.e. dosing and mixing, so as to adapt the flow to be degassed as function of use.

Still preferably, the method 100 also comprises a step of recirculating 109 via the recirculation line 25 at least one portion of the fluid reactive resin from the bottom 11, or generally from the collecting volume 24 when external to the container 2, to the inlet 6 of the container 2.

The step of recirculating 109 the degassed resin towards the container 2 is generally used when the use downstream of the container 2 is significantly reduced or interrupted for reasons related to transients in the use itself of degassed resins, or simply for safety reasons or to perform a new passage through the three-dimensional filter for dividing and diverting flows 9, 9'.

Advantageously, the present invention provides a method and apparatus to perform the degassing of resins in line, that is during the transfer between their own container and their dosing to be mixed and transferred to the vacuum product even without intermediate collection and subsequent use operations.

Advantageously, the present invention solves the drawbacks encountered in the prior art, not requiring an apparatus that is different and separate from the of reactive resin mixing and reaction vacuum infusion and moulding plant.

Advantageously, the present invention is consequently also optimal in terms of production times and costs.

Obviously, in order to meet contingent and specific requirements, a person skilled in the art will be allowed to bring several modifications and alternatives to the above-described method and apparatus, all falling within the scope of protection of the invention as defined by the following claims.

In particular, different types of feeding systems, or temperature control systems or sprinkling elements or taking-away systems may be adopted depending on the contingent needs.

## Claims

1. In line degassing method (100) of fluid reactive resin for a dosing and mixing apparatus for reactive resins and reaction vacuum infusion and moulding wherein said fluid reactive resin is processed in a vacuum container (2) to release dissolved or dispersed gases, said method (100) being **characterized by** comprising the following steps:
- heating (101) said fluid reactive resin before introducing it into said container (2) to lower the viscosity thereof;
- feeding (102) said fluid reactive resin in at least one inlet (6) of said container (2);
- sprinkling (103) said reactive resin inside said container (2) and close to an upper section (8) of said container (2);
- percolating (104) said sprinkled fluid reactive resin through a three-dimensional filter for dividing and diverting flows (9, 9');
- collecting (105) a volume of degassed resin at a collecting volume (24) at a lower section of said three-dimensional filter for dividing and diverting flows (9, 9');
- taking away (111) said fluid reactive resin subjected to degassing from said collecting volume (24) of said container (2) to feed at least one supply to said dosing and mixing apparatus in a control mode substantially contemporary or synchronized with said step of feeding (102) said fluid reactive resin into said at least one inlet (6) of said container (2).

2. Method (100) according to claim 1, further comprising a step of continuously controlling (106) a filling level of said container (2).

3. Method (100) according to claim 1 or 2, further comprising a step of recirculating (109) at least one portion of said fluid reactive resin from said collecting volume (24) to said inlet (6) of said container (2).

4. Method (100) according to any of claims 1 to 3, further comprising a step of controlling (107) said step of feeding (102) said fluid reactive resin into said at least one inlet (6) of said container (2) as a function of the use of said fluid reactive resin in said dosing and mixing apparatus.

5. Method (100) according to any of claims 1 to 4, further comprising a step of controlling (108) said step of taking away (105) said degassed fluid reactive resin from said collecting volume (24) of said container (2) as a function of the use of said fluid reactive resin in said dosing and mixing apparatus.

6. In line degassing apparatus (1) of fluid reactive resin for a dosing and mixing apparatus in mixing plants for reactive resins and reaction vacuum infusion and moulding, said degassing apparatus comprising:
- a vacuum container (2) to release dispersed or dissolved gases in a fluid reactive resin;
- a feeding system (3) of fluid reactive resin into said container (2);
- a temperature control system (4) associated with said feeding system (3);
- at least one sprinkler (7) to distribute the fluid reactive resin inside said container (2) and close to an upper section (8) of said container (2);
- a three-dimensional filter for dividing and diverting flows (9, 9) inside said container and downstream of said sprinkler (7);
- a collecting volume (24) in a lower section downstream of said three-dimensional filter for dividing and diverting flows (9, 9');
- a taking-away system (10) of fluid reactive resin at said collecting volume (24) of said container (2).

7. Apparatus (1) according to claim 6, wherein said collecting volume (24) is provided in a section downstream of said three-dimensional filter for dividing and diverting flows (9, 9') and close to a bottom (11) of said container (2).

8. Apparatus (1) according to claim 6 or 7, wherein said sprinkler (7) comprises at least one sheet perforated along parallel lines.

9. Apparatus (1) according to any of claims 6 to 8, wherein said three-dimensional filter for dividing and diverting flows (9) comprises a three-dimensionally developed metal mesh.

10. Apparatus (1) according to any of claims 6 to 8, wherein said three-dimensional filter for dividing and diverting flows (9') comprises a plurality of randomly arranged metal rings.

11. Apparatus (1) according to claim 9 or 10, wherein said three-dimensional filter for dividing and diverting flows (9, 9') has an apparent, or "bulk", density of filter elements between 40 kg/m³ and 500 kg/m³.

12. Apparatus (1) according to claim 9 or 10, wherein said three-dimensional filter for dividing and diverting flows (9, 9') has a full space to empty space ratio between 1% and 8%.

13. Apparatus (1) according to any of claims 6 to 12, wherein said upper section (8) of said container (2) comprises a tilted surface (12) with a conical development to feed said sprinkler (7) and manage a laminar flow for feeding said fluid reactive resin.

14. Apparatus (1) according to any of claims 6 to 13, further comprising a vacuum pump (18) and/or a vacuum storage tank (16) with the additional function of decanting fumes or vapours taken away from said container (2), said vacuum pump (18) and/or vacuum storage tank (16) being adapted to achieve said vacuum condition of said container (2).

15. Apparatus (1) according to any of claims 6 to 14, wherein said temperature control system (4) comprises at least one electrical resistance thermal exchanger and a closed loop control downstream of said exchanger with PID regulation.

16. Apparatus (1) according to any of claims 6 to 15, further comprising an accessory storage tank (21) connected to said collecting volume (24) of said container (2).

17. Apparatus (1) according to any of claims 6 to 16, further comprising a control logic based on a programmable logic controller (PLC) and adapted to adjust the flow rate according to degassed resin collecting level signals, and further corrected by a feedforward signal or adapted to adjust a taking-away flow rate according to supply request signals to an accessory tank (21) to said dosing and mixing apparatus.

18. Apparatus (1) according to claim 17, further comprising two minimum (26) and maximum (27) filling level sensors of said container (2).

19. Apparatus (1) according to any of claims 6 to 18, further comprising a fluid transfer pump (19) from said collecting volume (24) of said container (2).

20. Apparatus (1) according to any of claims 6 to 19, further comprising a feed pump (5) of said container (2).

21. Apparatus (1) according to any of claims 6 to 20, further comprising a recirculation line (25) downstream of said taking-away system (10).

22. Apparatus (1) according to any of claims 6 to 21, wherein said container (2) is cylinder-shaped with a vertical revolution axis with the semi-elliptical, hemispherical or flat closing plates.
